Europäisches Patentamt

European Patent Office

Office européen des brevets

(11) Publication number: **0 205 698**
**B1**

(12) EUROPEAN PATENT SPECIFICATION

(45) Date of publication of patent specification: **03.01.90**   (51) Int. Cl.⁵: **G 01 N 21/47**

(21) Application number: **85304634.0**

(22) Date of filing: **28.06.85**

(54) Compact reflectometer.

(43) Date of publication of application:
**30.12.86 Bulletin 86/52**

(45) Publication of the grant of the patent:
**03.01.90 Bulletin 90/01**

(84) Designated Contracting States:
**CH DE FR GB LI SE**

(56) References cited:
**EP-A-0 102 189**
**US-A-4 199 261**

(73) Proprietor: **EASTMAN KODAK COMPANY (a New Jersey corporation)**
**343 State Street**
**Rochester New York 14650 (US)**

(72) Inventor: **Lowne, Alan John**
**Kodak Park**
**Rochester New York 14650 (US)**

(74) Representative: **Davis, Ian Ellison et al**
**Kodak Limited Patent Department Headstone Drive**
**Harrow Middlesex HA1 4TY (GB)**

Courier Press, Leamington Spa, England.

## Description

This invention relates to a compact reflectometer, and particularly to one designed to be used as an analyzer carried by a patient.

Recent emphasis has been placed upon compact reflectometers that can be used directly by the patient as a blood analyzer. Particularly such reflectometers are needed by diabetics who take repeated measurements of the glucose levels of their whole blood. Most properly, such reading should be taken at regular intervals, wherever the patient finds himself. This is not possible unless the reflectometer is readily portable. Portability requires more than just being lightweight or small — the bulk and shape also dictate whether the reflectometer is convenient to carry. A truly portable and convenient reflectometer would be one which would fit, for example, in the patient's shirt or coat pocket. Preferably, such a reflectometer should not be thicker than 2 cm.

EP—A—102,189 describes a reflectometer featuring a light guide one interior surface of which acts as a mirror to reflect light from a light source to the horizontally supported test element. Such mirrored surface allows the light source to be displaced at an angle to, that is, to one side of, the normal to the test element, thereby permitting some reduction in thickness. However, because the conventional approach has been to "read" the element by detecting radiation diffusely reflected at 90° from the test element, the detector of necessity was placed under the test element. That is, it is conventional to direct incoming light at an angle of 45° to the test element, and to detect diffusely reflected light at an angle of 90° thereto, i.e., normal to the plane. This angular arrangement eliminates detection of specular reflection, namely that which is reflected at 45°. However, such an optical arrangement dictates the placement of the photodetector directly opposite to the supported test element. Although commercially available inexpensive detectors now have a reduced thickness, they still have an appreciable thickness that adds to the thickness of the photometer if the detectors are placed under the examined test element. The added thickness detracts from portability.

However, portability is not the only requirement. The reflectometer must be one that is otherwise convenient to use, to insure that it will be used as often as is required. Pocket-sized reflectometers are known — see for example, those described in the owner's Manual of the "Glucoscan"™ analyzer, published in 1982 by Lifescan. However, those reflectometers feature a test element that is oriented vertically when the reflectometer is placed in its normal resting position. Such vertical orientation has disadvantages, since any excess blood or serum sample on the absorbing pad of the test element will run off into the reflectometer and provide possible contamination. As a result, the patient must either blot off the excess, or wait until it is fully absorbed. In either case, the patient experiences an inconvenience. Also reflectometers such as the "Glucoscan" described above require the test element to be properly aligned with a thin, small slot in order to insert the pad into the reflectometer. This can be a difficulty for elderly or infirm patients.

Thus the problem of the invention is to provide a compact reflectometer that is portable by the user, e.g., in his shirt or coat pocket, and permits ready placement of the test element into the reflectometer. This problem is solved with a compact reflectometer for providing quantitative measurement of reflection densities, said reflectometer comprising means for supporting a generally planar test element in a predetermined plane, a light source constructed to project a beam of light centered on an axis of illumination, light detector means constructed to receive light centered on an axis of detection, characterised in that the reflectometer includes reflecting means for both a) reflecting light from said source to a predetermined location in said predetermined plane along a first path, and b) reflecting to said detector means along a second path, only light that is diffusely reflected from a test element at said predetermined location in said predetermined plane, said reflecting means, light source, and detector means being three-dimensionally disposed so that said first and second paths do not lie in a common plane.

It is an advantageous effect of the invention that a pocket-sized reflectometer is provided for use as an analyzer, wherein the risk of contamination of the instrument by the patient's sample is substantially reduced.

Thus, it is a related advantageous effect of the present invention that the reflectometer accepts a horizontally-positioned test element on a readily-accessible surface, and can have a thickness no greater than 2 cm.

It is another advantage of the invention that such a reflectometer can include a second detector means to function as a reference that is used to control and maintain constant the output of the light source, without sacrificing thinness.

The present invention will now be described by way of example with reference to the accompanying drawings in which:

Figure 1 is an isometric view of a reflectometer constructed in accordance with the present invention;

Figure 2 is a fragmentary plan view of a test element on the supporting surface of the reflectometer;

Figure 3 is a fragmentary sectional view taken generally along the line III—III of Fig. 2;

Figure 4 is a fragmentary sectional view taken generally along the path IV—IV of Fig. 3;

Figure 5 is a fragmentary sectional view taken along the path V—V of Fig. 4;

Figure 6 is a schematic view of the electronic controls of the reflectometer; and

Figure 7 is a schematic view of the signal processing circuit comprising part of such electronic controls.

The invention is hereinafter described particularly with respect to the preferred embodiments wherein the reflectometer of the invention is used as an analyzer of whole blood. The invention further is described in the preferred context of analyzing whole blood for glucose. In addition, the invention is useful in analyzing other biological liquids besides whole blood, and for analytes other than glucose. It is further useful as a reflectometer having a use other than as an analyzer, particularly where there is a need for compactness similar to that in clinical analysis.

As used herein, "biological liquids" means all liquids obtained from animals, including whole blood, plasma, serum, sweat, spinal fluid and urine, and liquids compatible with these animal liquids, such as control fluids, saline solutions and diluents.

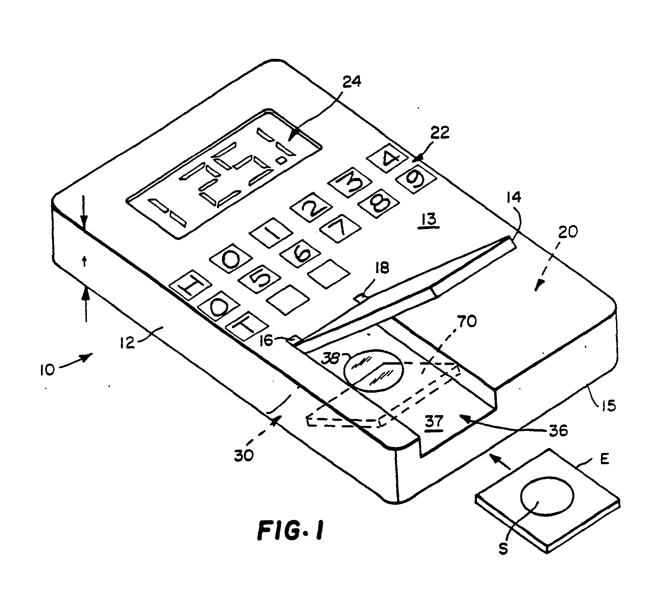

Figure 1 illustrates a reflectometer 10 constructed in accordance with the invention. A housing 12, which can be in one or several pieces, encases optic portions 30 discussed in detail hereinafter. The housing features two major exterior surfaces which have major portions 13 and 15, respectively, that are generally planar. Most preferably, portions 13 and 15 are also generally parallel. As used herein, the recitation of a feature of the reflectometer being "generally parallel" to a surface or plane, means being no more than 10° inclined to that surface or plane. "Major exterior surface" herein refers to the largest exterior surface.

A cover 14 for the reflectometer is pivotally attached at 16 and 18 to the housing 12 by conventional means. Also included are a microcomputer 20, and input/output devices comprising a keyboard 22 and a display 24, respectively.

Reflectometer 10 is intended to function with generally planar test elements E that contain all the necessary reagents in dried form in one or more layers, of which layer S is adapted to receive a patient sample. Test elements E and E' are only schematically illustrated in the drawings. Useful test elements are generally described in U.S. Patent Nos. 3,992,158 issued on November 16, 1976 and 4,258,001 issued on March 24, 1981. Test elements of this type are currently available under the trademark "Ektachem" from Eastman Kodak Company, Rochester, New York. If the analyzer is particularly used to assay for whole blood glucose, a preferred test element is the type described in PCT Publication No. 2192, published June 7, 1984.

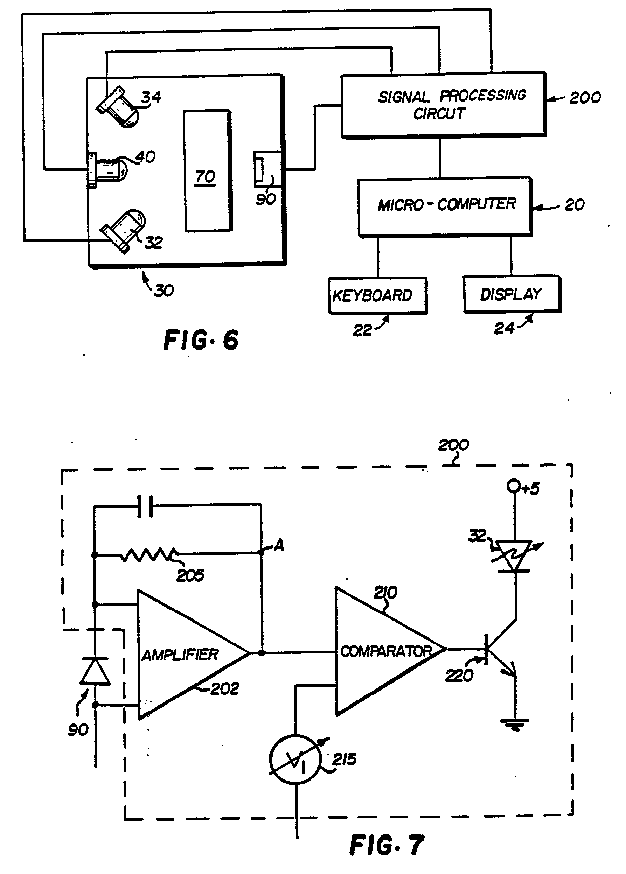

Any conventional microcomputer 20, Fig. 1, keyboard 22 or output display 24 is useful, although the miniaturized types are preferred. For example, a liquid crystal display 24 is preferred. These components are electrically connected in a conventional manner, Fig. 6, through a signal processing circuit 200 hereinafter discussed.

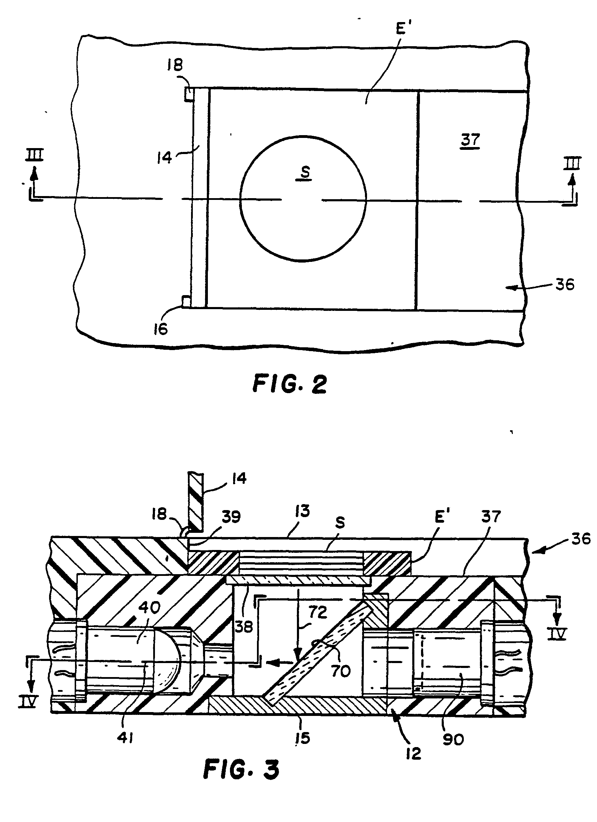

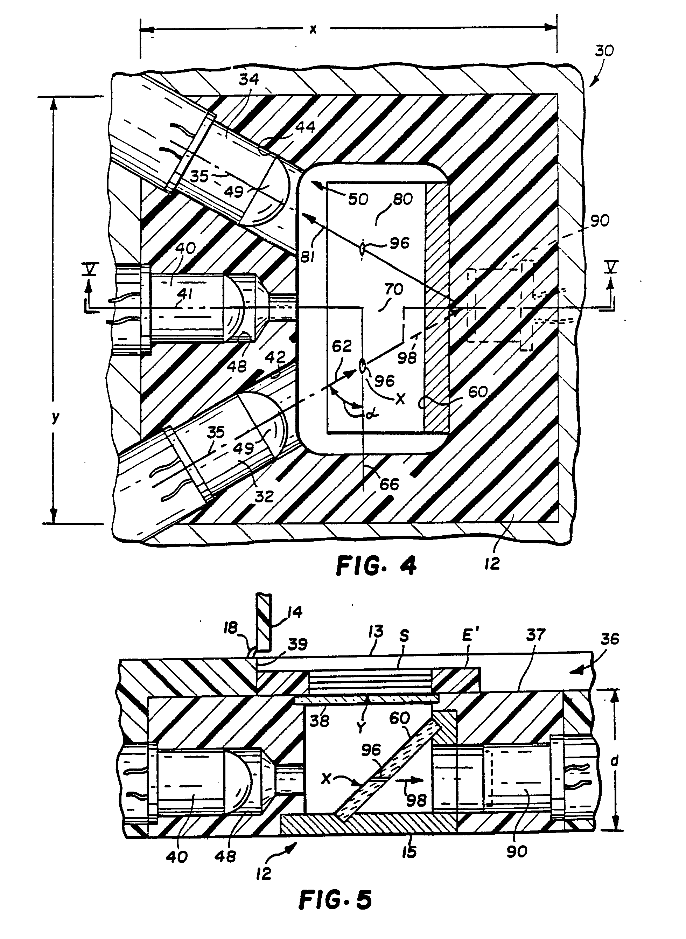

The various optic portions 30 of one preferred reflectometer, are shown in Figs. 1—5. This embodiment includes light sources 32 and 34 each emitting a light beam centered on an axis of illumination 35 (Fig. 4), a support groove 36 for supporting horizontally a test element E or E' (Figs. 1 and 2), such groove including a preferably planar support surface 37, a transparent plate 38 mounted within housing 12 to provide a window to the element, and a stop surface 39 (Fig. 3) for abutting the test elements. Plate 38 is also preferably planar. A detector 40 such as a photodiode (Figs. 3 and 4) which detects light along a path that is centered on an axis of detection 41, is included to detect diffusely reflected radiation from a supported test element E'. Light source 34 (Fig. 4) is preferably identical to source 32, except that the two emit light radiation at two different wavelengths, for example, red and green. Each of the light sources 32, 34 and detector 40 are mounted in appropriately shaped pockets 42, 44 and 48, respectively, (Fig. 4), formed within housing 12 adjacent to bottom surface portion 15 of housing 12 (Fig. 5). Preferably, the axes of pockets 42 and 44 are angled at about 30° to the axis of pocket 48 (Fig. 4) while forming a common plane with each other and pocket 48. Most importantly, that common plane is generally parallel to major portion 13 of the major exterior surface. That plane most preferably is also generally parallel to plate 38 (Fig. 3) to ensure the axes 35 and 41 of the light sources and detector are also generally parallel to the plane of the supported test element. Light sources 32 and 34 most preferably have lenses 49 that tend to collimate the light into narrow beams centered on their respective axes 35.

Because of the aforedescribed construction wherein the axes of the light source and detector of the reflectometer are parallel to the supported test element, a major portion of the dimensions that are ordinarily required between the light source or detector, and the test element, extend sideways, parallel to the plane of the test element and to the major exterior planes of the reflectometer, rather than perpendicular to that plane. The thickness of the reflectometer is therefore minimized.

The reflectometer preferably also includes a light trap 50, Fig. 4, for receiving light specularly reflected from the test element. Most preferably, light trap 50 comprises the light source 34, when light source 32 is operative. Similarly, light source 32 acts as a light trap when light source 34 is operative. However, any other light trap, such as a light-absorbing surface, is also useful.

Optic portions 30 include reflecting means, which most preferably is a reflecting surface 60, Figs. 3—5, for reflecting illuminating radiation along path 62, Fig. 4, from light source 32 onto supported test element E'. Such radiation proceeds from source 32 to a spot, generally designated "X", on surface 60. Most of the radiation is reflected to a spot "Y" generally centered on a supported test element, Fig. 5. To so direct the light from light source 32 to the test element, reflecting surface 60 is mounted within housing 12 so as to form an angle of 45° to surface 37.

Any conventional mirrored or reflective surface 60 will suffice, it being preferred that the surface be generally planar. The 45° orientation noted above is achieved by rotating the surface about one of its axes 66, Fig. 4.

Optic portions 30 also include, Figs. 3 and 4, a reflecting surface 70 for reflecting some of the diffusely reflected light from test element E', along folded path 72 to detector 40. Surface 70 is also disposed at an angle of 45° to the plane of surface 37.

It will be appreciated that reflecting surfaces 60 and 70 preferably fall in the same plane.

Because of such mirrored surfaces, illuminating radiation path 62 impinges at X onto surface 60 at angle alpha (α), Fig. 4, measured from axis 66. Path 62 is reflected up to and through plate 38 to the supported test element at an angle also equal to alpha. Light diffusely reflected from the test element at 90° (i.e., normal therefrom) is then reflected, Fig. 3, by surface 70 along folded path 72 to detector 40. Angle alpha is chosen to be as close to 90° as possible to maximize the light output of the diffuse reflection along path 72, without adding specular reflection to path 72. A particularly useful value for alpha is about 60°.

Most preferably, surfaces 60 and 70 comprise a single mirror. Preferably this same mirror provides a surface 80, Fig. 4, to reflect along path 81, specular reflectance from element E' to the light trap 50 formed by light source 34. Alternatively, surfaces 60, 70 and 80 can comprise three separate mirrors side-by-side.

Because a reflecting surface is used to fold the paths of both the illuminating light and the light diffusely reflected from test element E', both the light sources 32, 34 and the detector 40 can be disposed to one side, which is the left side as shown in Fig. 4, of the normal to the plane of element E'. As a result, distance "d", Fig. 5, namely the thickness of the reflectometer measured from support surface 37 to the major planar portion 15 of the bottom wall of housing 12, is minimized since that distance does not have to also include the thickness of the detector. Such distance is, in one example, no greater than 9 mm.

In accordance with another aspect of the invention, a second, reference detector 90 is disposed generally opposite to and coaxial with detector 40 to receive a small fraction (e.g., 10%) of the illuminating light that impinges on surface 60. As shown, surface 60 is apertured at 96 to allow such small fraction to pass through and towards detector 90 along path 98, Figs. 4 and 5. To allow detector 90 to also receive a portion of the illuminating radiation from light source 34 in a similar manner, Fig. 4, detector 90 is a wide-angle detector such as PIN photodiode VTB 5051 obtainable from VACTEC. Detector 40, for example is a photodiode VTB 1113 obtainable also from VACTEC.

Alternatively, surfaces 60 and 80 are only partially silvered at 96, to allow 10% of the illuminating radiation to be transmitted through to detector 90.

As will be readily apparent, light sources 32 and 34 are preferably LED's because of their size. Useful examples include those available from So Li Co., for example a red LED having the designation ESBR/SBR 5501, and a green LED having the designation ESBG/SBG 5501.

To control light sources 32 and 34 by means of detector 90, a signal processing circuit 200 preferably is provided, Figs. 6 and 7. This circuit receives the signals from both detectors 40 and 90, and controls the voltages applied to light sources 32 and 34. More specifically, circuit 200 comprises, Fig. 6, an amplifier, not shown, for the signal generated by detector 40, and an amplifier 202 for reference detector 90. It also comprises the circuitry which provides the feedback control of each light source. Specifically, it comprises resistor 205 that converts the current generated by reference detector 90 into a voltage at point A. This voltage goes to comparator 210, which compares it with the voltage level $V_1$ of a voltage source 215 preset at the factory. If the voltage at A is less (or greater) than $V_1$, comparator 210 generates a higher (or lower) voltage to transistor 220 to increase (or decrease) the current drive to the light source 32. A switch, not shown, connects the appropriate light source to the signal processing circuit 200 as the user switches from one light source to the other.

Alternatively, circuit 200 is replaced by a ratio circuit not shown, so that the ratio of the light detected by the reference detector during calibration, to the light detected by the reference detector during the test, is applied as a correction factor, as is well-known.

In another embodiment, not shown, light source 32 and detector 40 are reversed in position, so that the illuminating light strikes the supported test element at 90°.

As will be readily apparent, the dimensions x and y of optic portions 30, Fig. 4, which are the horizontal dimensions when in use, are much larger than the third dimension d, Fig. 5. For example, x and y can be about 30 mm and about 34 mm, compared to the 9 mm noted for d above. Because of such dimensions, it is contemplated that the reflectometer containing such optic portions will have a total maximum thickness "t", Fig. 1, between portions 13 and 15 of the exterior surfaces that is no greater than about 1.6 cm, and occupy a total volume no greater than about 1255 cc. Such a thickness and volume make it ideal for carrying in a pocket.

Because planar portion 15 of the bottom wall is generally parallel to support surface 37, and is itself adapted to rest on a horizontal surface, support surface 37 of the reflectometer is disposed horizontally when in use. The reflectometer is turned on and properly calibrated. The patient's drop of whole blood is applied to absorbing surface S of element E' already easily placed in the horizontal position shown in Fig. 5. Cover 14 is then closed, and one or more readings are taken. After use, the patient discards element E and returns the reflectometer to his shirt or coat pocket, a feature rendered possible by the small size of the reflectometer. As a result, the reflectometer readily accompanies the patient so that regular readings can be taken. Because the test element is read horizontally on a large surface area, the patient has no difficulty in placing the test element in its ready position against stop surface 39.

## Claims

1. A compact reflectometer for providing quantitative measurement of reflection densities, said reflectometer (10) comprising

means (36) for supporting a generally planar test element (E; E') in a predetermined plane,

a light source (32, 34) constructed to project a beam of light centered on an axis of illumination (35),

light detector means (40) constructed to receive light centered on an axis of detection (41),

characterised in that the reflectometer (10) includes reflecting means (60, 70) for both a) reflecting light from said source (32, 34) to a predetermined location in said predetermined plane along a first path (62), and b) reflecting to said detector means (40) along a second path (72), only light that is diffusely reflected from a test element (E; E') at said predetermined location in said predetermined plane, said reflecting means (60, 70), light source (32, 34), and detector means (40) being three-dimensionally disposed so that said first and second paths (62, 72) do not lie in a common plane.

2. A reflectometer as defined in Claim 1, wherein said supporting means (36) supports said element (E; E') so that said predetermined plane is horizontal.

3. A reflectometer as defined in Claim 1 or 2, wherein said predetermined plane of the test element (E; E') is generally parallel to said axes (35, 41), and said reflecting means (60, 70) comprises at least one reflecting surface for reflecting light to and from a test element (E; E') in said predetermined plane.

4. A reflectometer as defined in Claim 1, 2 or 3, wherein said first path (62) strikes said predetermined plane at a non-orthogonal angle and said second path (72) extends orthogonally from said predetermined plane.

5. A reflectometer as defined in Claim 4, wherein said non-orthogonal angle is about 60°.

6. A reflectometer as defined in any one of Claims 1 to 5, wherein said reflecting means (60, 70) comprises a single mirror surface disposed to reflect both illuminating light along said first path (62) and diffusely reflected light along said second path (72).

7. A reflectometer as defined in any one of Claims 1 to 6, and further including reference detector means (90) for detecting said light source (32, 34) directly as a reference against which detection by said light detector means (40) is compared, said reflecting means (60, 70) being disposed between said light source (32, 34) and said reference detector means (90) and constructed to pass a fraction of the light received from said light source (32, 34), to said reference detector means (90).

8. A reflectometer as defined in any one of Claims 1 to 7, wherein the total thickness of said reflectometer (10) is no greater than 2 cm.

9. A reflectometer as defined in any one of Claims 1 to 8, and further including a light trap (50) disposed to receive light specularly reflected by the supported test element (E; E') from said light source (32), and a second light source (34) disposed in said trap (50) with an axis of illumination (35) directed at said reflecting means (60, 70), said second light source (34) emitting light at a wavelength different from said first-named light source (32).

## Patentansprüche

1. Kompaktes Reflektometer zur quantitativen Messung von Reflexionsdichten mit Mitteln (36) für die Lagerung eines allgemein planen Testelements (E; E') in einer vorbestimmten Ebene, einer Lichtquelle (32, 34), die für die Projektion eines auf eine Beleuchtungsachse (35) zentrierten Lichtstrahls ausgebildet ist, und einer Lichtdetektoreinrichtung (40), die für den Empfang von Licht ausgebildet ist, das auf eine Detektorachse (41) zentriert ist, dadurch gekennzeichnet, daß das Reflektometer (10) Reflexionsmittel (60, 70) enthält, die (a) Licht von der Lichtquelle (32, 34) zu einer vorbestimmten Stelle innerhalb der vorbestimmten Ebene längs einer ersten Bahn (62) reflektieren sowie (b) zu der Lichtdetektoreinrichtung (40) hin längs einer zweiten Bahn (72) nur Licht reflektieren, das von einem Testelement (E; E') an der vorbestimmten Stelle innerhalb der vorbestimmten Ebene diffus reflektiert wird, wobei die Reflexionsmittel (60, 70), die Lichtquelle (32, 34) und die Lichtdetektoreinrichtung (40) dreidimensional angeordnet sind, so daß die erste und die zweite Bahn (62, 72) nicht in einer gemeinsamen Ebene liegen.

2. Reflektometer nach Anspruch 1, dadurch gekennzeichnet, daß die Mittel (36) das Testelement (E; E') so lagern, daß die vorbestimmte Ebene horizontal verläuft.

3. Reflektometer nach Anspruch 1 oder 2, dadurch gekennzeichnet, daß die vorbestimmte Ebene des Testelements (E; E') allgemein parallel zu den Achsen (35, 41) verläuft und die Reflexionsmittel (60, 70) mindestens eine reflektierende Fläche aufweisen, die Licht zu einem in der vorbestimmten Ebene befindlichen Testelement (E; E') hin- und von diesem zurückreflektieren.

4. Reflektometer nach Anspruch 1, 2 oder 3, dadurch gekennzeichnet, daß die erste Bahn (62) auf die vorbestimmte Ebene in einem nichtorthogonalen Winkel auftrifft und die zweite Bahn im rechten Winkel zu der vorbestimmten Ebene verläuft.

5. Reflektometer nach Anspruch 4, dadurch gekennzeichnet, daß der nichtorthogonale Winkel etwa 60° beträgt.

6. Reflektometer nach einem der Ansprüche 1—5, dadurch gekennzeichnet, daß die Reflexionsmittel (60, 70) eine einzige Spiegelfläche aufweisen, die so angeordnet ist, daß sie sowohl Licht der Beleuchtungsquelle längs der ersten Bahn (62) als auch diffus reflektiertes Licht längs der zweiten Bahn (72) reflektiert.

7. Reflektometer nach einem der Ansprüche 1—6, dadurch gekennzeichnet, daß es außerdem eine Bezugsdetektoreinrichtung (90) enthält, welche die Lichtquelle (32, 34) direkt als Bezugslichtquelle abtastet, mit der das Ergebnis der Lichtdetektoreinrichtung (40) verglichen wird, wobei die Reflexionsmittel (60, 70) zwischen der Lichtquelle (32, 34) und der Bezugsdetektoreinrichtung (90) angeordnet und so ausgebildet sind, daß sie einen Bruchteil des von der Lichtquelle (32, 34) auf sie fallenden Lichts zu der Bezugsdetektoreinrichtung (90) gelangen lassen.

8. Reflektometer nach einem der Ansprüche 1—7, dadurch gekennzeichnet, daß es eine Gesamtdicke von höchstens 2 cm hat.

9. Reflektometer nach einem der Ansprüche 1—8, dadurch gekennzeichnet, daß außerdem eine Lichtfalle (50) vorgesehen ist, die von dem Testelement (E; E') spiegelnd reflektiertes Licht der Lichtquelle (32) auffängt und daß innerhalb der Lichtfalle (50) eine zweite Lichtquelle (34) angeordnet ist, deren Beleuchtungsachse (35) auf die Reflexionsmittel (60, 70) hin ausgerichtet ist und die Licht ausstrahlt, dessen Wellenlänge sich von der des Lichts der erstgenannten Lichtquelle (32) unterscheidet.

**Revendications**

1. Un réflectomètre compact pour fournir une mesure quantitative des densités de réflexion, ledit réflectomètre (10) comprenant:
— des moyens (36) pour supporter, dans un plan prédéterminé, un organe de test (E; E') généralement plan;
— une source de lumière (32, 34) conçue pour projeter un faisceau lumineux centré sur un axe d'éclairement (35);
— des moyens de détection de la lumière (40) conçus pour recevoir la lumière centrée sur un axe de détection (41);
ledit réflectomètre étant caractérisé en ce qu'il comprend en plus:
— des moyens de réflexion (60, 70) pour à la fois:
a) réfléchir la lumière provenant de ladite source de lumière (32, 34) vers une une zone prédéterminée dudit plan prédéterminé le long d'un premier trajet (62), et
b) réfléchir vers les moyens de détection (40) le long d'un second trajet (72), seulement la lumière qui est réfléchie d'une manière diffuse par un organe de test (E; E') au niveau de ladite zone prédéterminé, dudit plan prédéterminée, la source de lumière (32, 34), les moyens de reflexion (60, 70) et les moyens de détection (40) étant disposés dans un espace tri-dimensionnel de façon à ce que ledit premier trajet (62) et ledit second trajet (72) ne soient pas dans le même plan.

2. Un réflectomètre selon la revendication 1, dans lequel lesdits moyens (36) supportent l'organe de test (E; E') de sorte que ledit plan prédéterminé soit horizontal.

3. Un réflectomètre selon l'une des revendications 1 ou 2, dans lequel ledit plan prédéterminé de l'organe de test (E; E') est généralement parallèle auxdits axes (35, 41) et en ce que les moyens de réflexion (60, 70) comprennent au moins une surface réfléchissante pour réfléchir la lumière vers l'organe de test (E; E') et provenant dudit organe dans ledit plan prédéterminé.

4. Un réflectomètre selon l'une des revendications 1, 2 ou 3, dans lequel ledit premier trajet (62) rencontre ledit plan prédéterminé selon un angle non perpendiculaire et dans lequel ledit second trajet (72) quitte perpendiculairement ledit plan prédéterminé.

5. Un réflectomètre selon la revendication 4, dans lequel ledit angle non perpendiculaire est d'environ 60°.

6. Un réflectomètre selon l'une quelconque des revendications 1 à 5, dans lequel lesdits moyens de réflexion (60, 70) comprennent une seule surface formant miroir disposée pour réfléchir à la fois la lumière d'éclairement le long dudit premier trajet (62) et celle réfléchie d'une manière diffuse le long dudit second trajet (72).

7. Un réflectomètre selon l'une quelconque des revendications 1 à 6, et comprenant en plus, des moyens de détection de référence (90) pour détecter ladite source de lumière (32, 34) directement afin d'être utilisée comme référence pour être comparée avec la lumière détectée par les moyens de détection (40) de la lumière, lesdits moyens de réflexion (60, 70) étant disposés entre la source lumineuse (32, 34) et lesdits moyens de détection de référence (90) et conçus de façon à laisser passer, vers les moyens de détection de référence (90), seulement une fraction de la lumière reçue de ladite source de lumière (32, 34).

8. Un réflectomètre selon l'une quelconque des revendications 1 à 7, dans lequel l'épaisseur totale dudit réflectomètre (10) n'excède pas 2 cm.

9. Un réflectomètre selon l'une quelconque des revendications 1 à 8, comprenant en plus un piège à lumière (50) disposé pour recevoir la lumière issue de la réflexion spéculaire par l'organe de test (E; E') et provenant de la source de lumière (32) et une seconde source de lumière (34) disposée à l'intérieur dudit piège (50) avec un axe d'éclairement (35) dirigé vers lesdits moyens de réflexion (60, 70), ladite seconde source de lumière (34) émettant une longueur d'onde différente de celle de la première source (32).

FIG·I

1

FIG. 2

FIG. 3

**FIG. 4**

**FIG. 5**

**FIG. 6**

**FIG. 7**